**Europäisches Patentamt**

**European Patent Office**

**Office européen des brevets**

(19)

(11) Numéro de publication : **0 178 229**
**B1**

(12) # FASCICULE DE BREVET EUROPÉEN

(45) Date de publication du fascicule du brevet :
03.01.90

(51) Int. Cl.⁵ : **H 04 M 11/04**, H 04 M 1/64

(21) Numéro de dépôt : **85401954.4**

(22) Date de dépôt : **07.10.85**

(54) **Transmetteur automatique de signaux, tels qu'un message d'alarme, sur ligne téléphonique.**

(30) Priorité : **08.10.84 FR 8415413**

(43) Date de publication de la demande :
**16.04.86 Bulletin 86/16**

(45) Mention de la délivrance du brevet :
**03.01.90 Bulletin 90/01**

(73) Titulaire : **SOCIETE MODERNE D'ELECTRONIQUE**
**Villa Mallebay 88 rue Didot**
**F-75014 Paris (FR)**

(72) Inventeur : **Tholozan, Eric**
**51, rue Barbès**
**F-92120 Montrouge (FR)**
Inventeur : **Vauvert, Alain**
**53, rue Duhesme**
**F-75018 Paris (FR)**

(74) Mandataire : **Plaçais, Jean-Yves et al**
**Cabinet Netter 40, rue Vignon**
**F-75009 Paris (FR)**

(84) Etats contractants désignés :
**BE CH DE GB LI LU**

(56) Documents cités :
EP—A— 0 037 573
FR—A— 2 484 177
FR—A— 2 532 803
GB—A— 2 106 354
ELECTRONICS, vol. 56, no. 9, mai 1983, pages 150-153, New York, US; A. ROSENBERG: "8052 microcomputer simplifies FET design"

EP 0 178 229 B1

## Description

L'invention concerne la transmission automatique, sur ligne téléphonique, de signaux tels que des messages d'alarme.

Une transmission d'alarme est intéressante notamment lorsque l'on utilise un détecteur d'intrusion, comme un radar de surveillance d'un local. Un exemple d'un transmetteur de ce genre est décrit dans la Demande de Brevet français n° 82 15024, déposée le 2 Septembre 1982, au nom de la Demanderesse.

Toutefois, il est souvent souhaité qu'un transmetteur délivre un message vocal, qui ne peut jusqu'à présent qu'être enregistré sur magnétophone. Il en résulte un encombrement et un prix élevés du transmetteur. De plus, son autonomie électrique, lorsqu'elle existe, est réduite, alors qu'il s'agit là d'un facteur de sécurité important, puisqu'une effraction est souvent précédée ou accompagnée d'une coupure de l'alimentation secteur.

Par ailleurs, et complémentairement, les applications croissantes de la transmission d'alarme nécessitent non seulement que les messages eux-mêmes soient adaptables, ce que permettent les messages parlés, mais aussi que l'appareil transmetteur puisse être adapté en fonction de la situation.

La présente invention vient apporter une solution au problème ainsi posé.

Un premier but de l'invention est de fournir un transmetteur d'alarme sous forme de messages parlés qui possède une autonomie importante, notamment comparable à celle des détecteurs d'intrusion.

Un second but de l'invention est que cet appareil permette directement à l'usager l'enregistrement et le rejeu des messages d'alarme qu'il a choisis.

Un autre but de l'invention est que l'appareil puisse opérer en poste téléphonique.

Encore un autre but de l'invention est que l'appareil opère en répondeur pour simuler la présence de l'usager avec sa voix propre.

Le transmetteur proposé comprend, de manière connue (FR-A-2 484 177), des moyens de connexion à la ligne téléphonique, des moyens de mémoire de signaux, et des moyens de commande de transmission comportant :

un microprocesseur dont la mémoire numérique constitue lesdits moyens de mémoire de signaux,

un organe de commande manuelle,

des moyens dans la mémoire morte du microprocesseur pour la transmission d'un message parlé, la mémoire vive du microprocesseur comprenant le numéro à demander,

un convertisseur numérique-analogique propre à délivrer des signaux vocaux à partir de données binaires.

Selon un aspect général de l'invention, les moyens de commande de transmission comportent en outre :

un comparateur analogique, dont une entrée est branchée à un circuit d'entrée de signal audiofréquence, et dont la sortie est reliée à une entrée du microprocesseur, ledit circuit d'entrée de signal audiofréquence comprenant, en amont du comparateur, un étage amplificateur à commande automatique de gain, suivi d'un filtre passe-bas commutable sur deux fréquences de coupure, dont l'une correspond aux signaux vocaux et l'autre aux tonalités téléphoniques,

des moyens dans la mémoire morte du microprocesseur, pour définir d'une part un processus de codage numérique de parole, et d'autre part un processus de reconnaissance d'au moins un jeu de tonalités téléphoniques,

au moins une entrée propre à établir un état de transmissions de message, et des moyens dans la mémoire morte pour commander la prise de la ligne téléphonique, puis la composition d'un numéro téléphonique prédéterminé, la transmission de message parlé s'effectuant en cas de succès repéré par reconnaissance de tonalités, la mémoire vive du microprocesseur comprenant en outre sous une forme en codage numérique, le message parlé à transmettre,

et le convertisseur numérique-analogique comprend une entrée branchée à un port de sortie du microprocesseur, et une sortie reliée à l'autre entrée du comparateur analogique, ainsi qu'à un circuit de sortie de signal audiofréquence, à travers un premier commutateur.

De préférence, le circuit de sortie du signal audiofréquence contient un filtre passe-bas.

Selon un autre aspect de l'invention, le transmetteur comprend en outre un microphone et un circuit de sortie audiofréquence de puissance, commutable et associé à un haut-parleur, l'entrée de ce circuit de puissance étant reliée au circuit de sortie de signal audiofréquence, ainsi que :

un second commutateur propre à relier le microphone au circuit d'entrée de signal audiofréquence ;

un troisième commutateur propre à relier le microphone à l'entrée du circuit de sortie de signal audiofréquence ; et

un quatrième commutateur propre à relier les moyens de connexion de ligne téléphonique, du côté réception à l'étage de sortie audiofréquence, tandis que la mémoire morte contient, sous une forme en code numérique, des messages vocaux fixes, ce qui permet la vérification locale sur haut-parleur de ces messages fixes, l'enregistrement par le microphone d'un message vocal choisi, dans la mémoire vive, la restitution de ce même message pour contrôle, par le haut-parleur, ces différents états étant sous le contrôle de l'organe de commande manuelle.

Avantageusement, le microphone et le circuit de puissance sont également commutables par l'organe de commande manuelle pour opérer en poste téléphonique.

Dans un mode de réalisation préférentiel, le codage numérique de parole est un codage delta adaptatif, de préférence avec compression de blancs, et la reconnaissance des tonalités s'effectue par transformée de Fourier rapide.

Selon un autre aspect de l'invention, dans son état de repos ou veille, le transmetteur opère en répondeur téléphonique avec un message préenregistré, après détection de sonnerie.

D'autres caractéristiques et avantages de l'invention apparaîtront à l'examen de la description détaillée ci-après, et des dessins annexés, sur lesquels :

la figure 1 est une vue schématique illustrant le branchement d'un transmetteur d'alarme selon l'invention, relié à un radar, sur une ligne téléphonique ;

la figure 2 est un schéma de principe du transmetteur d'alarme selon l'invention ;

la figure 3 est un premier diagramme illustrant les fonctions générales du transmetteur téléphonique selon l'invention ; et

la figure 4 est un diagramme illustrant les fonctions du transmetteur lors d'une transmission d'alarme par téléphone.

Les dessins annexés comportent de nombreux éléments de caractère certain, qu'ils peuvent seuls illustrer de manière à la fois simple et synthétique. En conséquence, ils sont à ajouter à la description non seulement pour permettre une meilleure compréhension de celle-ci mais aussi pour contribuer à la définition de l'invention, le cas échéant.

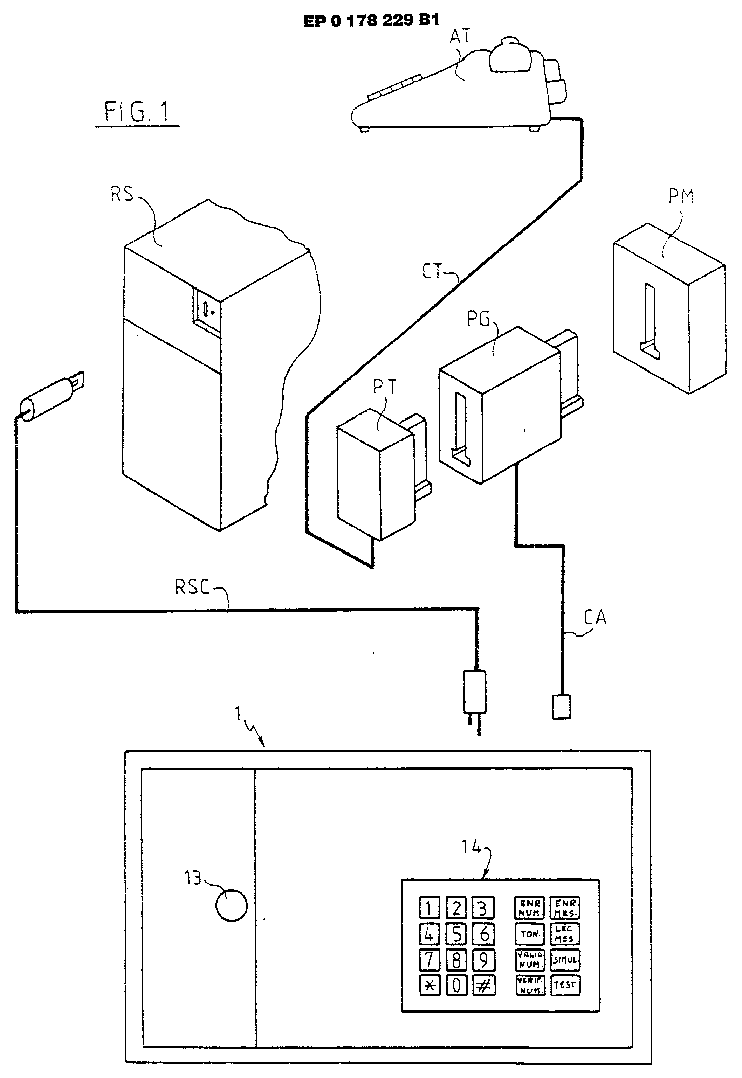

Sur la figure 1, l'appareil selon l'invention, défini par la référence générale 1, est connecté par un câble CA à une prise gigogne PG qui vient s'enficher dans une prise murale téléphonique PM. A son tour, la prise gigogne reçoit une prise mâle PT reliée par un câble CT à un appareil téléphonique AT.

L'appareil 1, dont le dessin montre ici qu'il est muni d'un clavier 14, ainsi que d'un emplacement de clé 13, est encore relié par un câble RSC à un radar de surveillance RS.

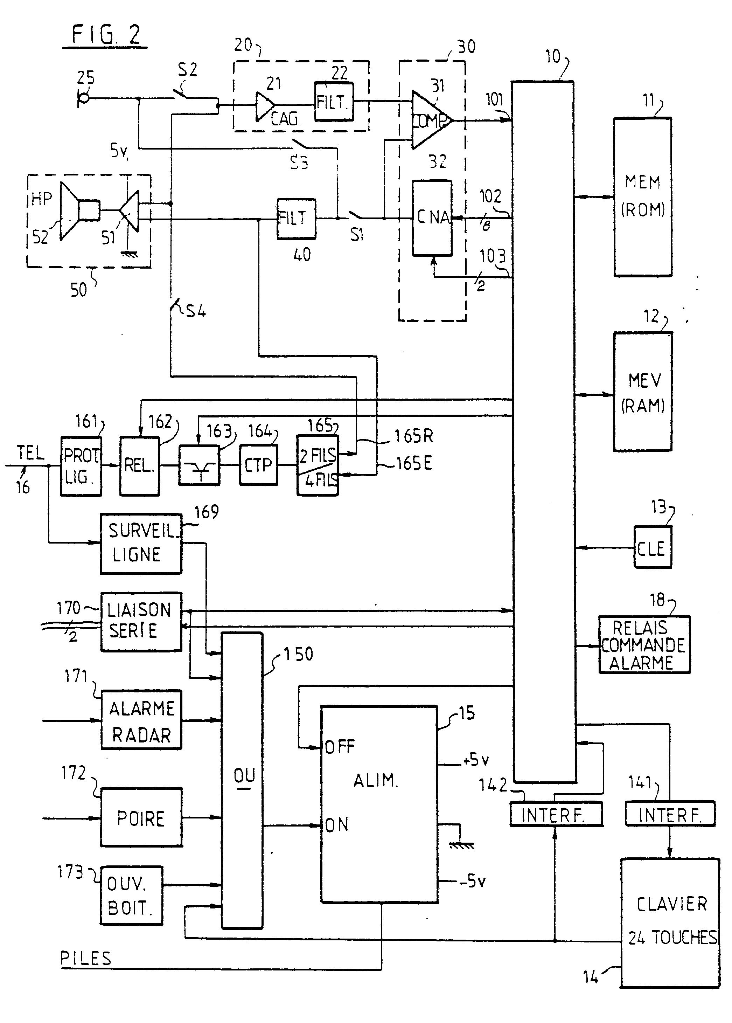

La figure 2 illustre le schéma détaillé de l'appareil de l'invention.

La ligne téléphonique arrive en 16. Elle s'y trouve connectée à un circuit de protection de la ligne 161, ainsi qu'à un circuit de surveillance de ligne 169, tous deux connus de l'homme de l'art.

La sortie du circuit de protection de ligne 161 est connectée à un relais de prise de ligne 162, qui coopère avec la prise gigogne PG pour former inverseur entre l'appareil téléphonique local AT et le transmetteur.

En aval du relais 162, il apparaît un étage de prise de ligne à transistor 163, commandé par coupleur photoélectrique, et propre également à réaliser une numérotation téléphonique par coupure de ligne.

Après l'étage 163, on trouve un étage 164 articulé autour d'une résistance à coefficient de température positif, de manière connue. Enfin, le circuit de connexion téléphonique se termine par un adaptateur deux fils/quatre fils, référencé 165, et muni d'une sortie de réception 165R vers le reste du transmetteur, en même temps que d'une entrée d'émission 165E vers la ligne téléphonique.

Un microprocesseur 10, qui peut être le modèle 8031 de la Société des Etats-Unis INTEL CORPORATION, est muni de mémoires mortes 11, qui peuvent être les circuits 27128 de la même Société, ainsi que de mémoires vives 12, qui peuvent être des circuits de 8 fois 8 k bits (soit 8 k octets).

Le microprocesseur comporte une entrée unifilaire 101, qui reçoit la sortie d'un comparateur analogique 31. Ce comparateur fait partie d'un ensemble 30 qui va, avec le microprocesseur 10, réaliser un codage numérique. L'ensemble 30 comporte aussi un convertisseur numérique-analogique 32. Par ailleurs, huit bits en provenance d'une sortie à huit fils 102 du microprocesseur 10 sont appliqués à huit entrées correspondantes du convertisseur 32. Celui-ci reçoit également une sortie à deux fils 103, provenant du microprocesseur 10, pour sa commande de conversion. La sortie du convertisseur 32 est appliquée à l'entrée de référence du comparateur 31. Elle peut être également appliquée, à travers un premier commutateur S1, à un filtre 40 qui constitue un circuit de sortie audiofréquence, la sortie de ce filtre étant appliquée à l'entrée 165E de l'adaptateur deux fils/quatre fils 165.

La sortie du filtre 40 est encore appliquée à une entrée d'un circuit amplificateur de puissance 51, dont le fonctionnement est commandé par son alimentation. Cet étage de puissance 51 excite un haut-parleur 52, avec lequel il constitue un reproducteur sonore audiofréquence désigné dans son ensemble par 50.

Un microphone 25 peut être relié, à travers un second commutateur S2, à un circuit d'entrée de signal audiofréquence, constitué en cascade d'un amplificateur 21, à commande automatique de gain, et d'un filtre 22, du type passe-bas, comme le filtre 40, mais commutable avec deux fréquences de coupure.

Une première fréquence de coupure, d'environ 1 000 Hz, est utilisée pour les tonalités téléphoniques. Dans les autres cas, la fréquence de coupure est de 3 000 Hz, avec une forte pente, qui peut aller jusqu'à 51 décibels par exemple.

Le microphone 25 peut encore être relié à travers un commutateur S3 à l'entrée du filtre passe-bas 40, dont la fréquence de coupure est pour sa part de 3000 Hz environ.

Enfin, la sortie de réception 165R de l'adaptateur deux fils/ quatre fils peut être reliée, à travers un quatrième commutateur S4, à l'entrée de l'amplificateur 21.

Les commutateurs S1 à S4, et le filtre 22, sont reliés par des lignes de commande (non représentées) au microprocesseur 10. Celui-ci peut ainsi fermer sélectivement chacun des commutateurs. La fréquence de coupure du filtre 22 est commandée en fonction de l'état du commutateur S2. Enfin, le microprocesseur 10 commande également le fonctionnement du circuit amplificateur de puissance 51.

Par ailleurs, l'appareil comporte un clavier 14 déjà cité, comportant typiquement 24 touches, à savoir 12 touches numériques, et 12 touches de fonction. De manière connue, le clavier est « interrogé » par le microprocesseur 10 à travers une interface 141. Il répond à cette interrogation par des sorties reliées à une interface 142 vers le microprocesseur. Cette interrogation du clavier 14 est de type matriciel.

Une liaison série 170, du type V24, relie directement une prise de l'appareil au microprocesseur 10.

Un circuit 15 d'alimentation par pile est normalement à l'état de veille, dès que le microprocesseur a arrêté ses fonctions.

Le réveil est défini par un circuit OU référence 150, dont les entrées reçoivent les sorties du circuit de surveillance de ligne 169, de la liaison série 170, de l'entrée d'alarme du radar 171, d'une poire de commande manuelle 172, ainsi que d'un circuit 173 qui détecte par un microcontact l'ouverture du boîtier du transmetteur. Chacune de ces fonctions est de nature à remettre le transmetteur en son état actif.

Enfin, il est prévu une clé 13 qui agit directement sur le microprocesseur 10 pour assurer la fonction marche-arrêt de l'appareil.

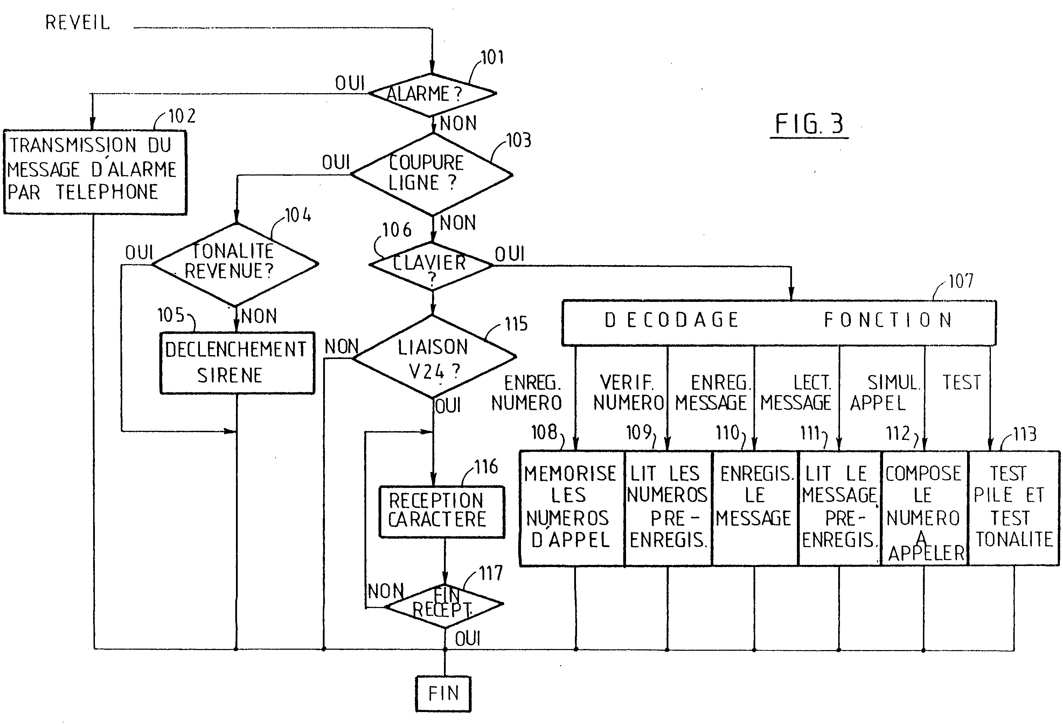

Il est maintenant fait référence à la figure 3.

Dès son réveil, l'appareil procède à une suite d'opérations de base. La première est un test 101 sur l'entrée d'alarme 171. En présence d'une alarme, une étape 102, décrite en détail ci-après, réalise la transmission du message d'alarme par téléphone. En l'absence d'alarme, un test 103 examine à partir du circuit 169 s'il s'est produit une coupure de ligne. Si oui, un test 104 attend le retour de tonalité au terme d'un intervalle de temps prédéterminé, par exemple de 10 secondes. Lorsque la tonalité n'est pas revenue dans le temps prescrit, une étape 105 déclenche une sirène locale, à travers le relais de commande d'alarme 18 (figure 2).

En l'absence d'une coupure de ligne, un test 106 examine si un ordre est donné au clavier. Si oui, le microprocesseur réalise en 107 un décodage de la fonction correspondante.

Les fonctions peuvent être :

un enregistrement du numéro téléphonique, qui est alors effectué par l'étape 108 ;

une vérification ou rejeu d'un numéro enregistré, effectuée à l'étape 109 ;

l'enregistrement d'un message effectué à l'étape 110 ;

la lecture d'un message pré-enregistré effectuée à l'étape 111 ;

la simulation d'un appel effectuée à l'étape 112 par composition du numéro à appeler ;

un test, effectué à l'étape 113, qui porte notamment sur l'état des piles et l'existence d'une tonalité téléphonique.

Dans le cas où il n'y avait ni alarme, ni coupure de ligne, ni ordre au clavier, on passe à un test 115 qui examine si la liaison V24 est active. Si oui, l'étape 116 reçoit le caractère numérique transmis par cette liaison, et ce jusqu'à ce qu'un test 117 indique la fin de la réception de tels caractères.

Le mécanisme qui vient d'être décrit se termine par une étape de fin. Il est bien entendu répété immédiatement si la porte OU 150 a détecté l'activation d'une autre entrée.

De façon plus générale, l'ensemble constitué du convertisseur numérique-analogique 32 et du comparateur 31 est propre à réaliser un codage numérique de parole, ainsi qu'un processus de reconnaissance d'au moins un jeu de tonalités téléphoniques.

De préférence, le codage de parole est réalisé sous la forme d'un codage delta adaptatif, avec compression de blancs. Cette technique est décrite notamment dans le Brevet des Etats-Unis n° 3 808 591, et, sous une forme simplifiée, dans la Demande de Brevet français publiée sous le N° 2 484 177. Le principe du codage delta est décrit dans l'ouvrage intitulé « Interfaces pour microprocesseurs et micro-ordinateurs » de H. LILEN, publié en France par les Editions RADIO.

On peut aussi utiliser la technique de codage par échantillonnage décrite dans la Demande de Brevet français publiée sous le no 2 288 430.

Une réalisation de transformée de Fourier rapide à partir d'un microprocesseur est décrite dans un article paru dans la revue ELECTRONICS le 5 Mai 1983, article intitulé « 8052 Micro Computer Simplifies FFT Design ». Il s'agit d'un microprocesseur très proche de celui utilisé préférentiellement pour la mise en œuvre de la présente invention, et possédant d'ailleurs un jeu d'instructions identique.

Avantageusement, la transformée de Fourier s'effectue selon l'invention en temps légèrement différé, après que les signaux qui doivent faire l'objet de cette transformation aient été soumis au codage delta adaptatif, lequel s'effectue pour sa part en temps réel.

La mémoire morte 11 peut contenir par construction des signaux verbaux codés comme il vient d'être dit. Ces signaux sont des messages de service du transmetteur, qui va par exemple dire « prêt » peu de temps après qu'on ait actionné sa clé marche-arrêt. Pour cela, l'interrupteur S1 est fermé, les autres demeurant ouverts. Les signaux de messages fixes émanant de la mémoire 11 sont utilisés par le microprocesseur 10 pour commander le convertisseur 32, lequel applique au filtre 40 le signal analogique audiofréquence déduit des signaux numériques pré-enregistrés. L'ensemble 50 donne alors le message parlé correspondant.

Dans un autre état de l'appareil, c'est le commutateur S2 qui est fermé, les autres étant ouverts. Le filtre 22 est sur sa fréquence de coupure de 3 000 Hz. A partir du microphone 25, l'usager peut alors pré-enregistrer ses propres messages, qui vont passer par l'ensemble 20, l'ensemble 30 qui réalise avec le microprocesseur 10 le codage delta adaptatif, et finalement se trouver enregistré dans la mémoire vive 12.

Dans un autre état de l'appareil, on va restituer, c'est-à-dire faire un « rejeu » des informations ainsi pré-enregistrées, pour leur contrôle. Le commutateur S1 est alors seul fermé, comme dans le premier cas, et la lecture des informations s'effectue de la même manière que lorsqu'elle provenait de la mémoire morte 11.

Un troisième état correspond à la détection de tonalités sur lignes téléphoniques. Le contact S4 est alors seul fermé. Les tonalités traversent le circuit d'entrée 20, pour faire l'objet du codage delta adaptatif par le circuit 30 et le microprocesseur 10. Les informations correspondant à la tonalité reçue sont stockées temporairement en mémoire vive 12. Elles font ensuite l'objet de la transformée de Fourier rapide, qui permet de reconnaître la tonalité, en fonction des normes téléphoniques locales.

Encore un autre état correspond à l'émission d'un message sur ligne téléphonique, à partir d'informations en code delta adaptatif qui peuvent provenir soit de la mémoire morte 11, soit surtout de la mémoire vive 12. Le fonctionnement est le même que pour la restitution locale de ces messages, sauf que, maintenant, les circuits 161 à 165 sont activés dans leur état de transmission vers la ligne téléphonique, à partir de l'entrée 165E.

La composition téléphonique peut s'effectuer par coupure de ligne, à l'aide du transistor 163, lorsque le réseau local l'exige.

Lorsque cela est possible, elle s'effectue par fréquences vocales. Ces fréquences sont pré-enregistrées dans la mémoire morte 11 ou éventuellement dans la mémoire vive 12. A partir d'elles, le microprocesseur 8031, qui possède des fonctions de calcul élaborées, réalise la somme de deux signaux sinusoïdaux, déterminés sous forme numérique. Le signal numérique somme est appliqué au convertisseur 32, qui le restitue à travers le contact S1 fermé au filtre 40, pour transiter là encore vers l'entrée 165E des circuits de connexion téléphoniques 161 à 165, qui sont actifs dans cette configuration.

La fermeture du contact S4 permet l'écoute d'un correspondant sur le haut-parleur 52, le signal de la sortie 165R allant ici directement sur l'amplificateur de puissance 51.

Enfin, il est possible de répondre au correspondant à partir du microphone 25, en fermant le contact S3. La parole passe alors par le filtre 40 avant d'accéder à l'entrée 165E du circuit de connexion téléphonique.

Les deux fonctions dernièrement décrites constituent un poste téléphonique.

Les fonctions qui viennent d'être décrites sont celles des blocs 108 à 112 de la figure 3. Pour la fonction 113, le test de pile est de type connu, et le test de tonalité a été décrit plus haut.

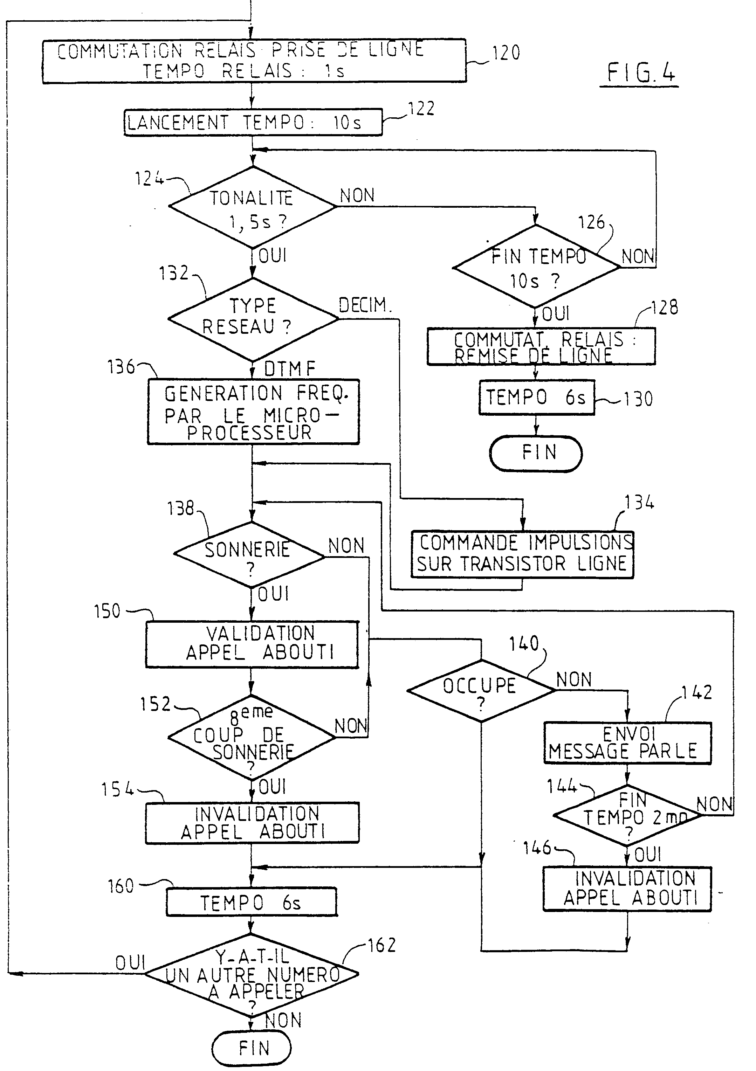

Il est maintenant fait référence à la figure 4, qui correspond à l'ensemble des opérations de transmission du message d'alarme par téléphone, c'est-à-dire au bloc 102 de la figure 3.

L'étape 120 de la figure 4 consiste en une commutation du relais 162, de façon que la ligne téléphonique soit maintenant reliée au transmetteur plutôt qu'à l'appareil téléphonique local AT. Une prise de ligne est effectuée par mise en conduction du transistor 163.

L'étape suivante 122 lance une temporisation qui est typiquement de 10 secondes.

Un test 124 détecte alors s'il se produit une tonalité de durée minimale 1,5 seconde. A défaut, un test 126 détermine si les 10 secondes de temporisation sont écoulées. Dans ce cas, une étape 128 remet le relais 162 et le transistor 163 dans leur état initial, après quoi une temporisation 130 de 6 secondes est suivie d'une fin de la tentative de transmission du message.

En règle générale, le test 124 aura donné une tonalité, et un test 132 détermine le type du réseau local à savoir si la numérotation s'effectue par impulsions décimales, ou par code à deux fréquences (dit souvent DTMF). Pour un réseau local de type décimal, une étape 134 commande le transistor 163 suivant le nombre d'impulsions et la séquence de tels nombres qui correspond au numéro voulu.

Pour un réseau dit DTMF, l'étape 136 engendre les paires de fréquences correspondant au numéro, comme précédemment décrit sur la base du microprocesseur 10.

Une étape 138 détecte alors la présence d'un signal de sonnerie. Si la réponse au test 138 est non, un test 140 détermine si le correspondant est occupé ou non. S'il ne l'est pas, l'étape 142 envoie le message parlé, comme défini plus haut. A la fin, un test 144 effectue une temporisation de deux minutes qui permet de répéter le message parlé.

Lorsque le test 140 révèle que la ligne est occupée, on passe en 160 à une temporisation de 6 secondes, suivie d'un test 162 pour déterminer si un autre numéro doit être appelé immédiatement, auquel cas l'ensemble des opérations de la figure 4 est répété.

Comme un bouclage est effectué à partir du test 144, la sortie NON du test 138 correspond à une répétition du message parlé.

Au début de l'appel, la sortie du test 138 aura été OUI. Une opération 150 réalise alors une validation signifiant que l'appel a abouti ; aussitôt après, un test 152 détermine si le huitième coup de sonnerie a été perçu. S'il l'a été, on considère que le correspondant ne répond pas, et l'opération 154 invalide l'appel abouti, pour terminer comme précédemment par l'étape 160.

Si, au contraire, le huitième coup de sonnerie n'a pas été perçu, c'est que le correspondant a décroché, et l'on va donc commencer à partir du test 140 pour envoyer plusieurs fois le message parlé.

L'homme de l'art comprendra que l'appareil qui vient d'être décrit réalise l'ensemble des opérations d'un transmetteur automatique de signaux, tels que des messages d'alarme, sur ligne téléphonique.

Il le fait d'une manière particulièrement économique en matériel, comme le montre le schéma de la figure 2.

On note également que le fonctionnement de l'appareil ne dépend que de piles dont la longévité peut être très grande, typiquement de deux ans.

De plus, le transmetteur est particulièrement souple, puisqu'il peut tout aussi bien fonctionner en poste téléphonique ou encore pour la transmission de tous signaux utiles qui peuvent lui être appliqués sur son entrée de liaison série V24, ou sur une autre entrée appropriée.

D'un autre côté, la sécurité de l'appareil peut être rendue très grande.

Un aménagement adéquat du circuit 169 permet à l'appareil d'opérer en répondeur. Dans ce cas, après avoir détecté une sonnerie arrivante, il décroche, puis répond par un message pré-enregistré, simulant ainsi la présence de l'usager dans les locaux surveillés. Cet aspect est très important pour éviter les intrusions.

Enfin, il est avantageusement prévu que l'adressage effectué par le microprocesseur 10, notamment dans sa mémoire morte 11, n'est pas direct, mais calculé, à partir d'un paramètre d'adresse stocké en mémoire vive 12.

Lorsque le circuit 173 détecte l'ouverture du boîtier, le microprocesseur en est immédiatement informé. Il peut alors altérer le paramètre d'adresse dans la mémoire vive 12, par exemple l'effacer. L'ensemble de l'adressage que peut faire le microprocesseur 10 est alors totalement brouillé, ce qui rend le transmetteur inopérant, et empêche les intrus de connaître le fonctionnement de l'appareil, et par conséquent de prévoir des contre-mesures adéquates.

La programmation ou la reprogrammation de l'appareil se fait à travers la liaison série 170.

## Revendications

1. Transmetteur automatique de signaux, tels qu'un message d'alarme, sur ligne téléphonique, comprenant des moyens de connexion à la ligne téléphonique, des moyens de mémoire de signaux, et des moyens de commande de transmission comportant :

un microprocesseur (10) dont la mémoire numérique (11, 12) constitue lesdits moyens de mémoire de signaux,

un organe de commande (14) manuelle,

des moyens dans la mémoire morte (11) du microprocesseur pour la transmission d'un message parlé, la mémoire vive (12) du microprocesseur comprenant le numéro à demander,

un convertisseur numérique-analogique (32) propre à délivrer des signaux vocaux à partir de données binaires,

caractérisé par le fait que les moyens de commande de transmission comportent en outre :

un comparateur analogique (31), dont une entrée est branchée à un circuit d'entrée (20) de signal audiofréquence, et dont la sortie est reliée à une entrée du microprocesseur, ledit circuit d'entrée de signal audiofréquence (20) comprenant, en amont du comparateur (31), un étage amplificateur à commande automatique de gain (21), suivi d'un filtre passe-bas (22) commutable sur deux fréquences de coupure, dont l'une correspond aux signaux vocaux et l'autre aux tonalités téléphoniques,

des moyens dans la mémoire morte (11) du microprocesseur, pour définir d'une part un processus de codage numérique de parole, et d'autre part un processus de reconnaissance d'au moins un jeu de tonalités téléphoniques,

au moins une entrée (170) propre à établir un état de transmissions de message, et des moyens dans la mémoire morte (11) pour commander la prise de la ligne téléphonique, puis la composition d'un numéro téléphonique prédéterminé, la transmission de message parlé s'effectuant en cas de succès repéré par reconnaissance de tonalités, la mémoire vive (12) du microprocesseur comprenant en outre sous une forme en codage numérique, le message parlé à transmettre,

et par le fait que le convertisseur numérique-analogique (32) comprend une entrée branchée à un port de sortie du microprocesseur, et une sortie reliée à l'autre entrée du comparateur analogique (31), ainsi qu'à un circuit de sortie (40) de signal audiofréquence, à travers un premier commutateur (S1).

2. Transmetteur selon la revendication 1, caractérisé en ce que le circuit de sortie (40) du signal audiofréquence contient un filtre passe-bas.

3. Transmetteur selon l'une des revendications 1 et 2, caractérisé en ce qu'il comprend en outre un microphone (25) et un circuit (51) de sortie audiofréquence de puissance, commutable et associé à un haut-parleur (52), l'entrée de ce circuit (51) étant reliée au circuit de sortie de signal audiofréquence (40) ainsi que :

un second commutateur (S2) propre à relier le microphone au circuit d'entrée de signal audiofréquence ;

un troisième commutateur (S3) propre à relier le microphone à l'entrée du circuit de sortie de signal audiofréquence, et

un quatrième commutateur (S4) propre à relier les moyens de connexion de ligne téléphonique, du côté réception, à l'étage de sortie audiofréquence, tandis que la mémoire morte (11) contient, sous une forme en code numérique, des messages vocaux fixes, ce qui permet la vérification locale sur haut-parleur de ces messages fixes, l'enregistrement par le microphone d'un message vocal choisi, dans la mémoire vive, la restitution de ce même message pour contrôle, par le haut-parleur, ces différents étant sous le contrôle de l'organe de commande manuelle.

4. Transmetteur selon la revendication 3, caractérisé en ce que le microphone (25) et le circuit de puissance (51) sont également commutables par l'organe de commande manuelle pour opérer en poste téléphonique.

5. Transmetteur selon l'une des revendications 1 à 4, caractérisé en ce que le codage numérique de parole est un codage delta adaptatif, de préférence avec compression de blancs, et en ce que la reconnaissance de tonalités s'effectue par transformée de Fourier rapide.

6. Transmetteur selon l'une des revendications 1 à 5, caractérisé en ce que, dans un état de repos ou de veille, il opère en répondeur téléphonique avec un message préenregistré, après détection de sonnerie.

7. Transmetteur selon l'une des revendications 1 à 6, caractérisé en ce qu'il est muni d'un organe de détection d'ouverture de son boîtier (173), et en ce qu'en réponse à une telle ouverture, le microprocesseur (10) altère une partie au moins de sa mémoire vive, de façon à brouiller les adresses d'accès à sa mémoire morte.

8. Transmetteur selon l'une des revendications précédentes, caractérisé en ce qu'il répond à une coupure de la ligne téléphonique par une alarme locale immédiate.

## Claims

1. An automatic transmitter of signals, such as an alarm message, over a telephone line, comprising means for connection to the telephone line, means for storing signals and transmission control means comprising :

a microprocessor (10) of which the digital store constitutes said means for storing signals,

a manual control member (14),

means in the read-only store (11) of the microprocessor for the transmission of a spoken message, the read-write store (12) of the microprocessor comprising the number to be called,

a digital-analogue converter (32) adapted to deliver voice signals based on binary data, characterised in that the transmission control means further comprise :

an analogue comparator (31), one input of which is connected to an input circuit (20) for an audio-frequency signal, and the output of which is connected to an input of the microprocessor, said input circuit for the audio-frequency signal (20) comprising, upstream of the comparator (31), an amplifier stage with automatic gain control (21) followed by a low-pass filter (22) which can be switched to two cut-off frequencies, one of which corresponds to the voice signals and the other to the telephone tones,

means in the read-only store (11) of the microprocessor for defining on the one hand a numeric coding process for speech, and on the other hand a recognition process for at least one set of telephone tones,

at least one input (170) adapted to establish a message transmission state, and means in the read-only store (11) to control the tapping of the telephone line, then the composition of a predetermined telephone number, the transmission of a spoken message taking place in the event of success marked by recognition of tones, the read-write store (12) of the microprocessor further comprising, in a numerically coded form, the spoken message to be transmitted,

and in that the digital-analogue converter (32) comprises an input connected to an output port of the microprocessor, and an output connected to the other input of the analogue comparator (31), as well as to an output circuit (40) for an audio-frequency signal, through a first switch (S1).

2. A transmitter according to Claim 1, characterised in that the output circuit (40) of the audio-frequency signal contains a low-pass filter.

3. A transmitter according to either one of Claims 1 and 2, characterised in that it further comprises a microphone (25) and a power audio-frequency output circuit (51) which can be switched and is associated with a loudspeaker (52), the input of this circuit (51) being connected to the output circuit for the audio-frequency signal (40), as well as :

a second switch (S2) adapted to connect the microphone to the input circuit for the audio-frequency signal ;

a third switch (S3) adapted to connect the microphone to the input of the output circuit for the audio-frequency signal and

a fourth switch (S4) adapted to connect the means for connecting the telephone line, at the receiving side, to the audio-frequency output stage, while the read-only store (11) contains fixed vocal messages in a form in numeric code, which permits the local verification of these fixed messages on a loudspeaker, the recording by the microphone of a selected vocal message in the read-write store, the restitution of this same message for checking, through the loudspeaker, these various things being under the control of the manual control member.

4. A transmitter according to Claim 3, characterised in that the microphone (25) and the power circuit (51) can likewise be switched by the manual control member to operate as a telephone set.

5. A transmitter according to any one of Claims 1 to 4, characterised in that the numeric speech coding is an adaptive delta coding, preferably with compression of blanks, and in that the tone recognition is effected by rapid Fourier transform.

6. A transmitter according to any one of Claims 1 to 5, characterised in that in a state of rest or watching state, it operates as a telephone answering set with a prerecorded message, after detection of ringing.

7. A transmitter according to any one of Claims 1 to 6, characterised in that it is equipped with a member for detecting opening of its casing (173) and in that, in response to such an opening, the microprocessor (10) garbles at least a portion of its read-write store in such a manner as to scramble the addresses for access to its read-only store.

8. A transmitter according to any one of the preceding Claims, characterised in that it responds to a cut in the telephone line by an immediate local alarm.

## Patentansprüche

1. Automatischer Signalgeber zum Übertragen von Signalen, z. B. einer Alarmnachricht, über Fernsprechleitung, mit Mitteln zum Anschließen an die Fernsprechleitung, Mitteln zum Speichern von Signalen und Mitteln zur Übertragungssteuerung, umfassend :

einen Mikroprozessor (10), dessen Ziffernspeicher (11, 12) die genannten Mittel zum Speichern von Signalen bildet,

ein handbetätigtes Bedienteil (14),

Mittel in dem Festspeicher (11) des Mikroprozessors für die Übertragung einer gesprochenen Nachricht, wobei der Arbeitsspeicher (12) des Mikroprozessors die anzufordernde Nummer enthält,

einen Digital/Analog-Umsetzer (32) zum Abgehen von Sprachsignalen aus Binärdaten,

dadurch gekennzeichnet, daß die Mittel zur Übertragungssteuerung außerdem umfassen :

einen Analogkomparator (31), dessen einer Eingang mit einem Tonfrequenzsignal-Eingangskreis (20) verbunden und dessen Ausgang an einen Eingang des Mikroprozessors geschaltet ist, wobei der genannte Tonfrequenzsignal-Eingangskreis (20) vor dem Komparator (31) eine Verstärkerstufe (21) mit automatischer Verstärkungsregelung enthält, auf welche ein Tiefpaßfilter (22) folgt, das auf zwei Grenzfrequenzen schaltbar ist, von denen die eine den Sprachsignalen und die andere den Fernsprechtönen entspricht,

Mittel in dem Festspeicher (11) des Mikroprozessors zum Definieren einerseits eines numerischen Sprach-Codierungsvorgangs und andererseits eines Vorgangs zum Identifizieren mindestens einer Gruppe von Fernsprechtönen,

mindestens einen Eingang (170) zum Herstellen eines Nachrichtenübertragungs-Zustands und in dem Festspeicher (11) Mittel zum Steuern des Belegens der Fernsprechleitung, dann der Zusammensetzung einer vorbestimmten Fernsprechnummer, wobei die Übertragung von gesprochener Nachricht im Falle von festgestelltem Erfolg durch Erkennen von Tönen durchgeführt wird, und der Arbeitsspeicher (12) des Mikroprozessors außerdem in einer numerisch kodierten Form die zu übertragende gesprochene Nachricht erfaßt,

und dadurch, daß der Digital/Analog-Umsetzer (32) einen mit einem Ausgangs-Port des Mikroprozessors verbundenen Eingang und einen mit dem anderen Eingang des Analogkomparators (31) sowie einem Tonfrequenzsignal-Ausgangskreis (40) über einen ersten Schalter (S1) verbundenen Ausgang umfaßt.

2. Signalgeber nach Anspruch 1, dadurch gekennzeichnet, daß der Tonfrequenzsignal-Ausgangskreis (40) ein Tiefpaßfilter enthält.

3. Signalgeber nach einem der Ansprüche 1 und 2, dadurch gekennzeichnet, daß er außerdem ein Mikrophon (25) sowie einen Tonfrequenz-Leistungsausgangskreis (51) umfaßt, der einem Lautsprecher (52) zuschaltbar und zugeordnet ist, wobei der Eingang der Schaltung (51) mit dem Tonfrequenzsignal-Ausgangskreis (40) verbunden ist, sowie :

einen zweiten Schalter (S2) zum Verbinden des Mikrophons mit dem Tonfrequenzsignal-Eingangskreis,

einen dritten Schalter (S3) zum Verbinden des Mikrophons mit dem Eingang des Tonfrequenzsignal-Ausgangskreises und

einen vierten Schalter (S4) zum Verbinden der empfangsseitigen Fernsprechanschlußmittel mit der Tonfrequenz-Ausgangsstufe, während der Festspeicher (11) in numerisch codierter Form feststehende Sprachnachrichten enthält, wodurch die örtliche Überprüfung dieser feststehenden Nachrichten über Lautsprecher, die Aufzeichnung einer ausgewählten Sprachnachricht durch das Mikrophon in dem Arbeitsspeicher, die Wiedergabe dieser Nachricht zur Kontrolle über den Lautsprecher möglich ist, und wobei die Steuerung dieser unterschiedlichen Ereignisse durch das handbetätigte Bedienteil erfolgt.

4. Signalgeber nach Anspruch 3, dadurch gekennzeichnet, daß das Mikrophon (25) und der Leistungskreis (51) von dem handbetätigten Bedienteil aus auch zum Arbeiten als Fernsprecher umschaltbar sind.

5. Signalgeber nach einem der Ansprüche 1 bis 4, dadurch gekennzeichnet, daß die numerische Sprachcodierung eine deltaadaptative Codierung, vorzugsweise mit Leerzeichenverdichter, ist, und daß die Tonerkennung durch schnelle Fourier-Transformierte erfolgt.

6. Signalgeber nach einem der Ansprüche 1 bis 5, dadurch gekennzeichnet, daß er im Ruhezustand oder Bereitschaftszustand nach Anruf als Anrufbeantworter mit einer vorher aufgezeichneten Nachricht arbeitet.

7. Signalgeber nach einem der Ansprüche 1 bis 6, dadurch gekennzeichnet, daß er ein Organ zum Nachweis dafür besitzt, daß sein Gehäuse (173) geöffnet wird, und daß der Mikroprozessor (10) als Reaktion auf dieses öffnen mindestens einen Teil seines Arbeitsspeichers verändert, so daß die Eintrittsadressen für seinen Festspeicher gestört werden.

8. Signalgeber nach einem der vorhergehenden Ansprüche, dadurch gekennzeichnet, daß er das Durchtrennen der Fernsprechleitung mit einem sofortigen lokalen Alarm beantwortet.

FIG. 1

RS

PM

CT

PG

PT

CA

RSC

1

13

14

| 1 | 2 | 3 | ENR NUM. | ENR MES. |
| 4 | 5 | 6 | TON. | LEC MES |
| 7 | 8 | 9 | VALID NUM | SIMUL |
| * | 0 | # | VERIF NUM. | TEST |

AT

FIG. 2

FIG. 3

REVEIL

ALARME ? — 101
OUI → TRANSMISSION DU MESSAGE D'ALARME PAR TELEPHONE — 102

NON

COUPURE LIGNE ? — 103
OUI

NON

TONALITE REVENUE? — 104
OUI

NON — 105
DECLENCHEMENT SIRENE

CLAVIER ? — 106
OUI → DECODAGE     FONCTION — 107

NON

LIAISON V24 ? — 115
NON

OUI

RECEPTION CARACTERE — 116

FIN RECEPT. — 117
NON

OUI

FIN

ENREG. NUMERO — 108
MEMORISE LES NUMEROS D'APPEL

VERIF. NUMERO — 109
LIT LES NUMEROS PRE-ENREGIS.

ENREG. MESSAGE — 110
ENREGIS. LE MESSAGE

LECT. MESSAGE — 111
LIT LE MESSAGE PRE-ENREGIS.

SIMUL. APPEL — 112
COMPOSE LE NUMERO A APPELER

TEST — 113
TEST PILE ET TEST TONALITE

EP 0 178 229 B1

**EP 0 178 229 B1**

FIG.4

COMMUTATION RELAIS : PRISE DE LIGNE  TEMPO RELAIS : 1s — 120

LANCEMENT TEMPO : 10s — 122

124 — TONALITE 1,5s ? — NON

126 — FIN TEMPO 10s ? — NON

OUI

132 — TYPE RESEAU ? — DECIM.

DTMF

136 — GENERATION FREQ. PAR LE MICRO-PROCESSEUR

128 — COMMUTAT. RELAIS : REMISE DE LIGNE

TEMPO 6s — 130

FIN

134 — COMMANDE IMPULSIONS SUR TRANSISTOR LIGNE

138 — SONNERIE ? — NON

OUI

150 — VALIDATION APPEL ABOUTI

140 — OCCUPE ? — NON

142 — ENVOI MESSAGE PARLE

152 — 8ème COUP DE SONNERIE ? — NON

144 — FIN TEMPO 2mn ? — NON

OUI

154 — INVALIDATION APPEL ABOUTI

146 — INVALIDATION APPEL ABOUTI

160 — TEMPO 6s

OUI — 162 — Y-A-T-IL UN AUTRE NUMERO A APPELER ? — NON

FIN

4